# EUROPEAN PATENT APPLICATION

(11) **EP 2 930 342 A1**
(43) Date of publication of application: **14.10.2015**
(21) Application number: 14164514.3
(22) Date of filing: 11.04.2014
(51) Int. Cl.: F02M 21/02, F02M 67/02, F02D 19/06

(54) **Combustion engine having a splitted fuel admission and a respective method**

(71) Applicant: EMPA Eidgenössische Materialprüfungs- und Forschungsanstalt, CH-8600 Dübendorf (CH)
(72) Inventor: Soltic, Dr. Patrik, 8248 Uhwiesen (CH); Biffiger, Hannes, 3900 Brig (CH)
(74) Representative: Schmauder & Partner AG Patent- & Markenanwälte VSP

(57) **Abstract**

The invention provides a combustion engine comprising at least one combustion chamber, preferably several combustion chambers (1), wherein to each combustion chamber a piston (2) moving within a cylinder (3), a cylinder head (4) comprising at least one admission valve (5), at least one outlet valve (6), at least one spark plug (7) an intake port (13) and a throttle (8) controlling the engine load, is assigned. The combustion chamber (1) comprises a secondary injector means (14) for injecting a secondary fuel directly into the combustion chamber (1) in the direction of the spark plug (7) and secondary fuel supply means (15) for supplying a gas as a secondary fuel to said secondary injector means (14). Supply means (16) for compressed air and mixture means for providing a mixture of air and gas fuel to said secondary injector means (14), facilitating the stoichiometric air-to-fuel ratio to be held at λ=1.

## Description

### Technical field

The invention is related to combustion engine having a splitted fuel admission and a respective method.

### Background of the invention

Combustion engines using gaseous fuel like compressed natural gas (CNG), biogas, landfill gas or even burnable synthetic gases or gasified liquid fuels line gasoline, methanol, ethanol or the like can be operated with stoichiometric air-to-fuel ratio (λ=1) and optionally with exhaust gas recirculation (EGR). Alternatively or additionally such combustion engines can be used with boosting using turbochargers, superchargers and the like. The use of a three-way-catalyst enables low pollutant emissions. Especially when exhaust gas recirculation is used, the inflammability of the mixture is deteriorated so that high-energy spark ignition systems or pilot injection systems have to be used. High-energy spark ignition systems have the disadvantage that the life expectancy of spark plugs is reduced. Pilot injection systems according to the state of the art most of which using a secondary diesel-like fuel injection have to be used with the disadvantage of a dual system causing logistical problems.

From JP 07-63076 A a combustion engine is known - according to the second embodiment of that document - with a gasified fuel supplied into the port and a direct injection of a small amount of natural gas towards the spark plug prior ignition. The concept according to this embodiment of JP 07-63076 A is directed onto an increased ignitability (inflammability) of a hard-to-ignite mixture and is applicable for lean-burn combustion with λ>1 but such an approach does not facilitate the operation with stoichiometric air-to-fuel ratio (λ=1).

### Description of the invention

According to a first aspect the invention has the object to provide a splitted gaseous fuel combustion engine enabling a stable and robust inflammability of a hard-to-ignite mixture using a spark plug together with an operation with stoichiometric air-to-fuel ratio (λ=1). According to a second aspect the invention has the object to provide an engine operation method which enables a stable and robust inflammability of a hard-to-ignite mixture using a spark plug together with stoichiometric air-to-fuel ratio (λ=1) in a split gaseous fuel combustion engine.

The objects of the invention according to the aforementioned aspects are solved by the apparatus of claim 1 and a method according to claim 9, respectively. The main fuel is any fuel having good mixture characteristic with air and may have a low spark--ignition characteristic, preferably compressed natural gas, which is injected into the intake manifold. It should be noted that other gases like gasified gasoline, methanol, ethanol or other gases like biogas, landfill gas or synthetic gas can be used instead. The second fuel is any gas according to the list above. The measures of the invention primarily have the effect that the spark ignition efficiency is significantly increased by injecting the secondary fuel mixture directly into the direction of the spark plug. Moreover, the invention provides effective parameters in order to maintain the stoichiometric air-to-fuel ratio to λ=1 which parameters are the (natural) gas to air ratio of the secondary fuel mixture, the amount of secondary fuel mixture, the penetration length of the mixture injected and the injection time.

Additional controlling and/or adjusting is possible when the combustion engine comprises control means or adjusting means for controlling or adjusting the mixture ratio of air and gas fuel and/or, of the mixture means, the amount of the mixture of the mixture means and/or the penetration length of the mixture injected by the secondary injector means. The amount of the mixture can be controlled or adjusted by the end of injection in respect to the phase of the cylinder movement, e.g. with a fixed start of injection or vice versa. The penetration length of the mixture injected by the secondary injector means can be controlled or adjusted by the injection pressure of the mixture injected. It may be advantageous when an exhaust gas recirculation connection means comprising an external gas recirculation control valve and control means for controlling said external gas recirculation control valve is used.

One advantageous method of operating can be provided with several, at least two injection intervals for each cylinder cycle spaced by a time without injection.

In a not regular operating mode - i.e. in case of an emergency - one or more cylinders are operated by injection of the secondary injector means only.

An advantageous operation mode is when the port comprises a primary fuel injector and the same gaseous fuel is used in the primary fuel injector and the secondary fuel injector.

The aforementioned elements as well as those claimed and described in the following exemplary embodiments, to be used according to the invention, are not subject to any particular conditions by way of exclusion in terms of their size, shape, use of material and technical design, with the result that the selection criteria known in the respective field of application can be used without restrictions. It should be noted that all means used to implement the invention are not limited to a particular design.

### Brief description of the drawings

Examples of the engine will henceforth be described in more detail by reference to the drawings, wherein are shown:
- Figure 1: is a diagram of pertinent elements of a cylinder of a combustion engine according to a preferred embodiment of the invention;
- Figure 2: a possible control scheme for the use of the combustion engine according to figure 1;
- Figure 3: a timing diagram of the fueling situation in a normal mode of the combustion engine according to figure 1;
- Figure 4: a timing diagram of the fueling situation in a not regular ("emergency") mode of the combustion engine according to figure 1 ; and
- Figure 5: a timing diagram of the fueling situation in exhaust gas increasing mode of the combustion engine according to figure 1.

### Embodiments for carrying out the invention

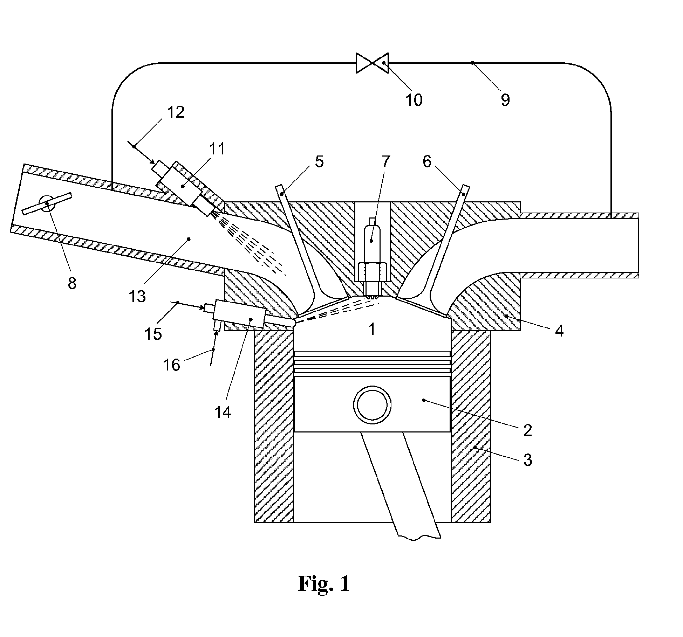

Figure 1 shows a part of a combustion engine comprising the conventional elements like a combustion chamber (1), a piston (2) moving within a cylinder (3), a cylinder head (4) comprising an admission valve (5), an outlet valve (6) and a port (13). The combustion engine according to this embodiment of the invention is provided with at least one spark plug (7) for ignition.

Fuel (12) for this internal combustion engine is mixed in the intake port (13) using a fuel injector (11) or - alternatively - another mixing device like a carburettor. The amount of already burned gases inside the combustion chamber (1) is controlled using external EGR (9) with an EGR control valve (10) or by setting the timing of the intake (5) and exhaust (6) gas exchange valves accordingly. The engine load is controlled using a throttle (8) in combination with the amount of EGR and optionally by controlling a boosting device like a turbocharger, supercharger or similar.

It should be noted that fuel (12) means several liquid or gaseous fuel types. Typical liquid fuels are gasoline, methanol or ethanol. Typical gaseous fuels are natural gas, biogas, landfill gas, synthetic gas which are gases consisting mainly of methane, hydrogen, propane, butane, carbon monoxide with possible inert parts like nitrogen, carbon dioxide or air.

In operating conditions where the inflammability of the mixtures is poor, a secondary fuel injector (14) which is able to inject directly into the combustion chamber (2) injects a small amount of a mixture of additional fuel (15) and air (16) prior to ignition or, if consecutive ignition is applied, prior first ignition in such a way that a good inflammable air/fuel mixture is established around the spark plug (7).

The overall air-to-fuel ratio in the combustion chamber remains at λ=1. Good inflammability can be controlled by setting the air to fuel ratio of the secondary fuel injector, the amount of the mixture as well as the penetration length of the directly injected mixture. The effect of the increased inflammability is not just achieved by the control of the stoichiometry of the mixture around the spark plug but also by influencing the flow field in such a way, that a fast and stable flame kernel development is given.

It should be noted that secondary fuel injector which is the direct injector can be fed by a mixture of fuel and air which may be pressurized or - if not pressurized - the pressure increase of the air has to be performed within the injector. Alternatively, the secondary fuel injector may use a mixture of fuel and air mixed before.

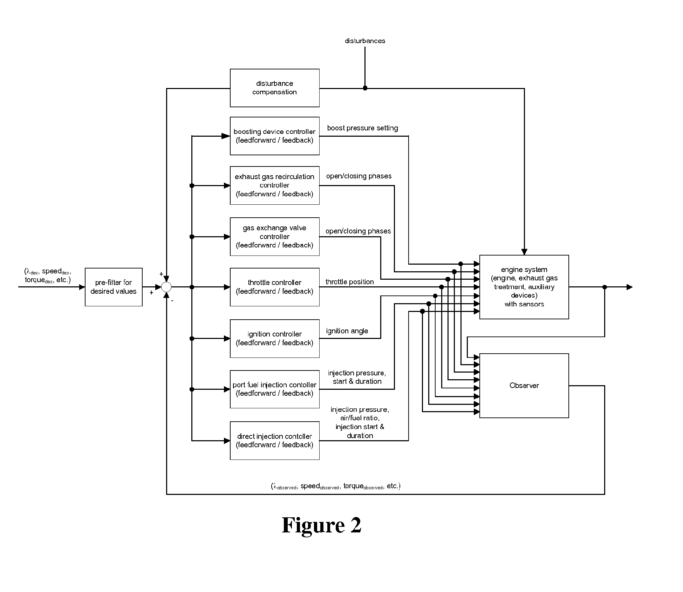

The control of the engine system is laid out to achieve desired targets which are mainly lowest fuel consumption, lowest pollutant emissions and good driveability. This is done using feedforward and feedback control strategies on the respective actuating variables while the distribution between port fuel and direct injection (quantity, quality, timing, pressure) are new actuating variables. The optimum control structures are typically found by numerical modelling of the engine system and the best parameters are typically found with help of experiments on an engine test bench. A possible control scheme is shown in Figure 2. This scheme allows the control of λ using the port fuel- and the direct injection path by setting the injection timings, the pressures and the air/fuel ratio of the direct injection accordingly.

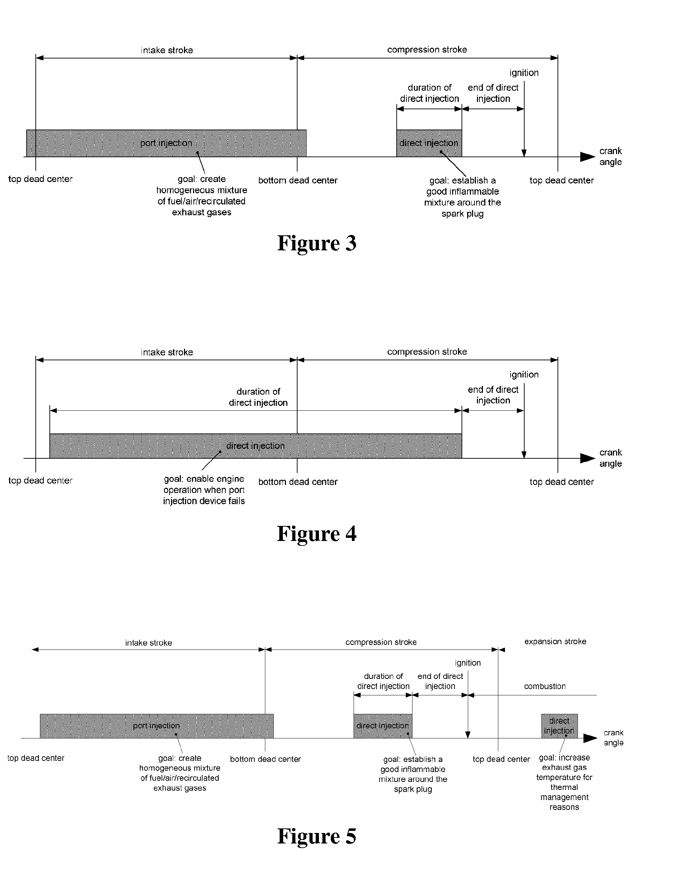

In normal mode, port fuel injection is typically performed during the intake stroke and direct injection is performed during the compression stroke prior ignition. The exact phasing of the direct injection event depends on the layout of the engine and the operating point and it is typically found using numerical simulation and/or experiments. The typical timing diagram according to the normal mode is shown in figure 3.

If the port fuel injector fails, the direct injection mode can be prolonged so that the engine can still be operated in an "emergency mode". The typical timing diagram according such an "emergency mode" is shown in figure 4.

If the exhaust gas temperature has to be increased (e.g. for thermal management reasons of the exhaust gas treatment devices), an additional direct injection event can be placed during the expansion stroke (prior opening of the exhaust valve). The typical timing diagram according such a "temperature increasing mode" is shown in figure 5.

### List of reference signs

- 1: combustion chamber
- 2: piston
- 3: cylinder
- 4: cylinder head
- 5: admission valve
- 6: outlet valve
- 7: spark plug
- 8: throttle
- 9: exhaust gas recirculation
- 10: exhaust gas recirculation control valve
- 11: primary fuel injector
- 12: primary fuel supply
- 13: port
- 14: secondary fuel injector
- 15: secondary fuel supply
- 16: air supply

## Claims

1. Combustion engine comprising at least one combustion chamber, preferably several combustion chambers (1), wherein to each combustion chamber a piston (2) moving within a cylinder (3), a cylinder head (4) comprising at least one admission valve (5), at least one outlet valve (6), at least one spark plug (7), an intake port (13) with a primary fuel injector or a carburettor and a throttle (8) controlling the engine load, is assigned, wherein said combustion chamber (1) comprises a secondary injector means (14) for injecting a secondary fuel directly into the combustion chamber (1) in the direction of the spark plug (7) and secondary fuel supply means (15) for supplying a gas as a secondary fuel to said secondary injector means (14),
**characterized by**
supply means (16) for pressure air and mixture means for providing a mixture of air and gas fuel to said secondary injector means (14).

2. Combustion engine according to claim 1, **characterized by** control means for controlling the mixture ratio of air and gas fuel of said mixture means.

3. Combustion engine according to claim 1, **characterized by** adjusting means for adjusting the mixture ratio of air and gas fuel of said mixture means.

4. Combustion engine according to any of claims 1 to 3, **characterized by** control means for controlling the amount of the mixture injected by said secondary injector means (14), preferably by controlling the end of injection.

5. Combustion engine according to any of claims 1 to 3, **characterized by** adjusting means for adjusting the amount of the mixture injected by said secondary injector means (14), preferably by adjusting the end of injection.

6. Combustion engine according to any of claims 1 to 5, **characterized by** control means for controlling the penetration length of the mixture injected by said secondary injector means (14), preferably by controlling the injection pressure of the mixture injected by said secondary injector means (14).

7. Combustion engine according to any of claims 1 to 5, **characterized by** adjusting means for adjusting the penetration length of the mixture injected by said secondary injector means (14), preferably by adjusting the injection pressure of the mixture injected by said secondary injector means (14).

8. Combustion engine according to any of claims 1 to 7, **characterized by** an exhaust gas recirculation connection means (9) comprising an external gas recirculation control valve (10) and control means for controlling said external gas recirculation control valve.

9. A method for operating a combustion engine comprising at least one combustion chamber, preferably several combustion chambers (1), wherein to each combustion chamber a piston (2) moving within a cylinder (3), a cylinder head (4) comprising at least one admission valve (5), at least one outlet valve (6), at least one spark plug (7) and an intake port (13) and a throttle (8) controlling the engine load, is assigned, wherein said combustion chamber (1) comprises a secondary injector means (14) for injecting a secondary fuel directly into the combustion chamber (1) in the direction of the spark plug (7) and secondary fuel supply means (15) for supplying a gas as a secondary fuel to said secondary injector means (14),
**characterized in that**
pressure air is supplied and mixed with said secondary gas and provided to said secondary injector means (14) and injected.

10. The method according to claim 9, **characterized in that** the mixture is injected prior to ignition or, in case of consecutive ignitions, prior to first ignition.

11. The method according to claim 9 or 10, **characterized in that** the mixture ratio of air and gas fuel of said mixture means is controlled by control means.

12. The method according to any of claims 9 to 11, **characterized in that** the amount of the mixture of air and gas fuel injected by said secondary injector means (14) is controlled by control means.

13. The method according to any of claims 9 to 12, **characterized in that** the penetration length of the mixture injected by said secondary injector means (14) is controlled by control means.

14. The method according to any of claims 9 to 13, **characterized by** at least two injection intervals for each cylinder cycle spaced by a time wherein no injection is provided.

15. The method according to any of claims 9 to 14, **characterized in that** the combustion engine for one or more cylinders is operated by injection of the secondary injector means (14) only.

16. A method according to any of claims 9 to 15, **characterized in that** the port comprises a primary fuel injector and the same gaseous fuel is used in the primary fuel injector and the secondary fuel injector.
